# EUROPÄISCHE PATENTANMELDUNG

(11) **EP 1 172 390 A1**
(43) Veröffentlichungstag der Anmeldung: **16.01.2002**
(21) Anmeldenummer: 01117003.2
(22) Anmeldetag: 12.07.2001
(51) Int. Cl.: C08G 18/70, C08G 18/78, C08G 18/79, C08G 18/80, C09J 175/02

(54) **Lagerstabile Isocyanatdispersionen**

(30) Priorität: 15.07.2000 DE 10034637
(71) Anmelder: JOWAT LOBERS & FRANK GMBH & CO. KG, D-32758 Detmold (DE)
(72) Erfinder: Guse, Dieter, Dr., 32584 Löhne (DE); Hippold, Theodor, 32108 Bad Salzuflen (DE); Terfloth, Christian, Dr., 32760 Detmold (DE)
(74) Vertreter: Gesthuysen, von Rohr & Eggert

(57) **Zusammenfassung**

Es werden lagerstabile, im wesentlichen wäßrige 1-Komponenten-Dispersionen beschrieben, die desaktivierte Isocyanate und isocyanatreaktive Polymere enthalten und bereits bei niedrigen Temperaturen vernetzen.

## Beschreibung

Die Erfindung betrifft lagerstabile 1-Komponenten-Dispersionen, die oberflächendesaktivierte Isocyanate und isocyanatreaktive Polymere enthalten, ihre Herstellung sowie ihre Verwendung.

Hochwertige Klebeverbindungen werden heute nach dem Stand der Technik meist mit reaktiven Klebstoffen durchgeführt. Hierzu sind eine Reihe von verschiedenen Klebstoffsystemen bekannt. Polyisocyanate werden hierbei wegen ihrer hohen Reaktionsfähigkeit bei vielen Anwendungen verwendet.

Bei der Anwendung unterscheidet man sogenannte 2-Komponenten-Klebstoffsysteme und 1-Komponenten-Klebstoffsysteme.

2-Komponenten-Klebstoffe werden unmittelbar vor der Applikation gemischt, wobei sich hier für den Anwender ein zusätzlicher Arbeitsschritt ergibt. Bei der Mischung der 2-Komponenten können zudem Dosierungs- oder Mischfehler auftreten.

Daneben gibt es 1-Komponenten-Klebstoffsysteme, wie z. B. isocyanat-terminierte Polymere, die nach der Applikation durch Reaktion mit Feuchtigkeit vernetzen. Der Nachteil bei diesen Systemen liegt darin, daß die Aushärtung lange dauert, da die Vernetzung von der Diffusionsgeschwindigkeit des Wassers abhängig ist. Bei sehr dicken Schichten kann zudem die Vernetzung auch unvollständig bleiben.

Es sind ferner stabile 1-Komponentensysteme mit chemisch blockierten Isocyanaten bekannt, die sich durch chemische Blockierung der Isocyanate mit monofunktionellen Reaktionspartnern formulieren lassen (z. B. EP 159 117). Diese Blockierung ist thermisch reversibel, so daß unter Hitzeeinwirkung das Blockierungsmittel abgespalten und das freigesetzte Isocyanat unter Vernetzung mit den reaktiven Gruppen des Polymers eine thermostabile Verbindung eingeht. Nachteilig bei diesen Systemen ist, daß das Blockierungsmittel, wenn es bei den Anwendungstemperaturen flüchtig ist, verdampft und so die Umwelt belasten kann, oder, wenn es im Klebstoff verbleibt, zu Qualitätsnachteilen bei der Klebeverbindung führen kann. Zudem ist ein solches System für thermisch empfindliche Substrate ungeeignet, weil die Blockierung unter Hitzeeinwirkung abgespalten werden muß.

In der EP 0 204 970 A2 und der zu derselben Patentfamilie gehörigen US-Patentschrift US-A-4 888 124 wird ein Verfahren zur Herstellung stabiler Dispersionen oberflächendesaktivierter oder verkapselter fester Polyisocyanate in einer Flüssigkeit durch Behandlung von Polyisocyanaten mit geeigneten Desaktivierungsmitteln offenbart. Um die Polyisocyanate, insbesondere feste Polyisocyanate, lagerstabil zu dispergieren und eine vorzeitig unerwünschte Reaktion mit dem Medium zu verhindern, werden die dispergierten Isocyanate an ihrer Oberfläche mit einem geeigneten Desaktivierungsmittel desaktiviert. Die Stabilisierung der Polyisocyanate erfolgt also durch das Aufbringen einer Polymerumhüllung an der Oberfläche der Polyisocyanate. Die auf diese Weise behandelten Isocyanate besitzen dann eine sogenannte retardierte Reaktivität. Sie werden synonym als "verkapselte Isocyanate", "oberflächendesaktivierte Isocyanate" oder einfach nur als "desaktivierte Isocyanate" bezeichnet.
In der zuvor genannten EP 0 204 970 A2 und US-A-4 888 124 wird ferner die Verwendung der nach dem Verfahren dieser Druckschriften hergestellten Dispersionen oberflächendesaktiverter fester Polyisocyanate als Vernetzer offenbart.
Nachteilig bei den in der EP 0 204 970 A2 und US-A-4 888 124 beschriebenen Systemen ist allerdings, daß das Aufbrechen der desaktivierenden Polymerumhüllungen, insbesondere Polyharnstoffkapseln, und damit einhergehend die Vernetzung erst bei Temperaturen zwischen 70 und 180 °C stattfindet. Daher sind solche Systeme für thermisch empfindliche Substrate ungeeignet.

Die EP 0 505 889 A2 beschreibt wäßrige Dispersionen verkapselter oder oberflächendesaktivierter Polyisocyanate in Mengen von mindestens 12 Gew.-%, bezogen auf den NCO-Gehalt der Dispersion, wobei die Verkapselung bzw. Oberflächendesaktivierung der Polyisocyanate dadurch bewirkt wird, daß man die dispergierten Polyisocyanate mit Polyaminen mit Molekulargewichten unterhalb von 400 in einem Äquivalentverhältnis von Aminogruppen zu Isocyanatgruppen (N_{NH₂}/N_{NCO}) von mindestens 0,05:1,0, d. h. mindestens 5 %, reagieren läßt. Die beschriebenen Dispersionen haben zwar verlängerte Topfzeiten, sind aber nicht lagerstabil; denn, wie die Ausführungsbeispiele zeigen, sinkt der Isocyanatgehalt nach wenigen Stunden deutlich ab. Die beschriebenen Dispersionen sind nicht dazu geeignet, zu Filmen verarbeitet zu werden, weil sie keine isocyanatreaktive Komponente enthalten.

Die EP 0 922 720 A1 und die zu derselben Patentfamilie gehörende internationale Offenlegungsschrift WO 99/29755 beschreiben ein Verfahren zur Herstellung lagerstabiler latentreaktiver Schichten oder Pulver aus oberflächendesaktivierten festen Polyisocyanaten und isocyanatreaktiven Polymeren mit funktionellen Gruppen. Die Polyisocyanate der Ausführungsbeispiele werden mit Polyaminen mit hohem Molekulargewicht desaktiviert. Nachteil der beschriebenen Dispersionen ist es, daß sie erst bei höheren Temperaturen vernetzen, so daß sie insbesondere für bei Raumtemperatur ablaufende Verfahren oder für die Verklebung temperaturempfindlicher Substrate nicht in Betracht kommen.

Die auf die Anmelderin selbst zurückgehende internationale Offenlegungsschrift WO 99/58590 beschreibt ein Stoffsystem in Form einer 1-Komponenten-Dispersion, die desaktivierte Isocyanate aufweist und bereits bei niedrigen Temperaturen vernetzt, insbesondere bei Temperaturen unterhalb 70 °C.

Es ist somit Aufgabe der vorliegenden Erfindung, 1-Komponenten-Dispersionen bereitzustellen, die bei niedrigeren Temperaturen vernetzen.
Weiterhin ist es Aufgabe der vorliegenden Erfindung, im wesentlichen wäßrige 1-Komponenten-Dispersionen bereitzustellen, die einerseits bei Raumtemperatur im Zustand der Dispersion lagerstabil sind, andererseits aber während und/oder nach Entfernen des Wassers (z. B. nach Auftrag auf einem Substrat) zu vernetzen beginnen.
Insbesondere ist es Aufgabe der vorliegenden Erfindung, im wesentlichen wäßrige 1-Komponenten-Systeme aus oberflächendesaktivierten Isocyanaten und isocyanatreaktiven Polymeren bereitzustellen, die im Zustand der Dispersion gelagert werden können, aber bei Auftrag zu Schichten oder Filmen während und/oder nach Entfernen des Wassers bei niedrigen Temperaturen vernetzen. Hierbei soll insbesondere das in der WO 99/58590 beschriebene Stoffsystem weiterentwickelt und anwendungsoptimiert werden.

Es wurde nun in überraschender Weise gefunden, daß der Einsatz von **an sich** bekannten, verkapselten oder desaktivierten Isocyanaten als Vernetzerkomponenten in wäßrigen Dispersionen zu lagerstabilen Systemen führt, die zusammen mit isocyanatreaktiven Komponenten während und/oder nach Entfernen des Wassers (z. B. nach Auftrag auf einem Substrat) jedoch schon bei Temperaturen von weniger als 70° C vernetzen.

Gegenstand der vorliegenden Erfindung sind somit vernetzbare, bei Raumtemperatur (20 °C, 65 % relative Feuchtigkeit) lagerstabile, im wesentlichen wäßrige 1-Komponenten-Dispersionen, die
(a) mindestens ein oberflächendesaktiviertes oder verkapseltes festes Isocyanat, das mit einem niedermolekularen Desaktivierungsmittel mit einem Molekulargewicht MG ≤ 200 g/mol desaktiviert worden ist, wobei das Desaktivierungsmittel eine oder mehrere primäre und/oder sekundäre Aminogruppen enthält und wobei für den Desaktivierungsgrad (DG), berechnet als Äquivalentverhältnis von Aminogruppen zu Isocyanatgruppen (N_{NH₂}/N_{NCO}), gilt:
   0,009:1,0 < DG < 0,05:1,0 (d. h.: 0,9 % < DG < 5 %); und
(b) mindestens ein mit Isocyanat reaktives Polymer, enthalten,
so daß die ausgehend von diesen Dispersionen gebildeten Filme oder Schichten während und/oder nach Entfernen des Wassers bei Temperaturen zwischen 5 °C und 40 °C, insbesondere bereits bei Raumtemperatur (20 °C, 65 % relative Feuchtigkeit), vernetzbar sind.

Die erfindungsgemäßen Dispersionen müssen so eingestellt werden, daß die ausgehend von diesen Dispersionen gebildeten Filme oder Schichten während und/oder nach Entfernen des Wassers und des gegebenenfalls in geringen Mengen vorhandenen Lösungsmittels bereits bei den zuvor genannten Temperaturen zu vernetzen beginnen. Dies bedeutet, daß während und/oder nach Entfernen des Wassers die Reaktion zwischen den Isocyanatgruppen des desaktivierten Isocyanats und den isocyanatreaktiven Gruppen des Polymers ausgelöst wird, so daß es zur Bildung eines geschlossenen Films unter den zuvor genannten Bedingungen kommt.
Die Einstellung der erfindungsgemäßen Dispersionen erfolgt insbesondere durch die Auswahl der Art und Menge der festen Isocyanate, durch die Art der Oberflächendesaktivierung (insbesondere Art und Menge des Desaktivierungsmittels) sowie durch die Auswahl der Art und Menge der isocyanatreaktiven Polymeren.
Die Anmelderin hat nun überraschenderweise herausgefunden, daß die Einstellung insbesondere dann zu Dispersionen mit den gewünschten Eigenschaften führt, wenn als Desaktivierungsmittel ein niedermolekulares Mono-, Di- oder Polyamin mit einer oder mehreren primären und/oder sekundären Aminogruppe(n) und mit einem Molekulargewicht MG ≤ 200 g/mol verwendet wird und wenn der Desaktivierungsgrad (DG), berechnet als Äquivalentverhältnis von Aminogruppen des Desaktivierungsmittels zu Isocyanatgruppen des zu desaktivierenden Isocyanats (N_{NH₂}/N_{NCO}), im Bereich von 0,009:1,0 < DG < 0,05:1,0 ausgewählt ist, d. h. im Bereich zwischen 0,9 % und 5 % liegt.

Die Desaktivierung der Isocyanate erfolgt in an sich bekannter Weise (siehe insbesondere EP 0 205 970 A2 und US-A-4 888 124). Die Oberflächendesaktivierung - synonym bisweilen kurz nur als "Desaktivierung" oder als "Verkapselung" bezeichnet - kann dabei auf verschiedene Weisen durchgeführt werden, nämlich insbesondere:
(i) durch Dispersion des pulverförmigen festen Isocyanats in einer Lösung des Desaktivierungsmittels;
(ii) durch Eintragen einer Schmelze eines niederschmelzenden Isocyanats in eine Lösung des Desaktivierungsmittels in einem nichtlösenden flüssigen Dispersionsmittel;
(iii) durch Zugabe des Desaktivierungsmittels oder einer Lösung des Desaktivierungsmittels zu einer Dispersion der festen feinteiligen Isocyanate oder umgekehrt.

Die Desaktivierung kann dabei in organischen Lösemitteln und/oder aber auch in Wasser erfolgen, wobei gegebenenfalls übliche, dem Fachmann geläufige Hilfsmittel wie Dispergierhilfsmittel, Netzmittel oder dergleichen eingesetzt werden können. Die Methoden (i) und (iii) sind erfindungsgemäß bevorzugt, insbesondere Methode (iii).
Für weitere Einzelheiten zur Desaktivierung fester Isocyanate kann verwiesen werden auf die bereits zitierte EP 0 205 970 A2 und die entsprechende US-Patentschrift US-A-4 888 124, deren Inhalt hiermit in vollem Umfang durch Bezugnahme eingeschlossen ist. Dort werden auch Desaktivierungsmittel genannt; dabei handelt es sich insbesondere um Verbindungen mit hydrophilen Gruppen wie insbesondere Aminogruppen oder Hydroxylgruppen, die mit den freien Isocyanatgruppen des Isocyanats reagieren können und somit eine Oberflächenhülle auf den Isocyanaten ausbilden, welche die Isocyanate zunächst desaktiviert, so z. B. Amine, Diamine und Polyamine sowie Alkohole, Diole und Polyole.

Wie zuvor beschrieben, wird als Desaktivierungsmittel erfindungsgemäß ein niedermolekulares Mono-, Di- oder Polyamin mit einer oder mehreren primären und/oder sekundären Aminogruppe(n) und mit einem Molekulargewicht MG ≤ 200 g/mol verwendet, und zwar in solchen Mengen, daß der Desaktivierungsgrad (DG), berechnet als Äquivalentverhältnis von Aminogruppen des Desaktivierungsmittels zu Isocyanatgruppen des zu desaktivierenden Isocyanats (N_{NH₂}/N_{NCO}), zwischen 0,9 und 5 Äquivalent-% liegt.
Insbesondere kann das Desaktivierungsmittel ein Molekulargewicht MG ≤ 180 g/mol, insbesondere ≤ 160 g/mol, vorzugsweise ≤ 140 g/mol, ganz besonders bevorzugt ≤ 120 g/mol, aufweisen.
Erfindungsgemäß geeignete, primäre und/oder sekundäre Aminogruppen enthaltende Desaktivierungsmittel sind insbesondere ausgewählt aus der Gruppe von cyclischen und aliphatischen, geradkettigen oder verzweigten (C₂-C₁₄)-Alkylaminen, -diaminen und -polyaminen, insbesondere (C₂-C₁₀)-Alkylaminen, -diaminen und -polyaminen, vorzugsweise (C₂-C₆)-Alkylaminen, - diaminen und -polyaminen, wobei die Alkylkette zumindest teilweise oder aber vollständig durch Heteroatome, insbesondere Sauerstoff oder Schwefel, unterbrochen sein kann und/oder wobei die Alkylkette weitere Substituenten wie beispielsweise Hydroxylgruppen, Carboxylgruppen, Halogen oder dergleichen enthalten kann.

Als Beispiele für erfindungsgemäß geeignete Desaktivierungsmittel lassen sich die folgenden Verbindungen nennen: 2-Pentamethylen-1,5-diamin und dessen Isomere und Homologe wie z. B. 1,6-Hexamethylendiamin; Di-sek.-Butylamin; Ethylendiamin; 1,3-Propylendiamin; Diethylentriamin; Triethylentetramin; 3,3'-Dimethyl-4,4'-diaminodicyclohexylmethan; Methylnonandiamin; Isophorondiamin; 4,4'-Diaminodicyclohexylmethan; Alkanolamine und -diamine wie Ethanolamin und Diethanolamin. Hierunter ganz besonders bevorzugt sind das 2-Pentamethylen-1,5-diamin und dessen Isomere und Homologe wie z. B. 1,6-Hexamethylendiamin.

Als Isocyanate kommen erfindungsgemäß alle bei Raumtemperatur festen Diisocyanate und Polyisocyanate in Betracht. Insbesondere können alle Diisocyanate oder Polyisocyanate oder deren Gemische verwendet werden, die einen Schmelzpunkt oberhalb von 40 °C aufweisen und sich durch bekannte Methoden in Pulverform mit mittleren Teilchengrößen unter 200 µm, vorzugsweise unter 100 µm, überführen lassen. Dies können aliphatische, cycloaliphatische, heterocyclische oder aromatische Diisocyanate oder Polyisocyanate sein.
Beispielsweise seien die folgenden Isocyanate genannt: 4,4'-Methylendi(phenylisocyanat) (= Diphenylmethan-4,4'-diisocyanat, MDI), Toluylendiisocyanat-Urethdion (= TDI-Urethdion, TDI-U, dimeres 1-Methyl-2,4-phenylendiisocyanat), TDI-Harnstoff, Naphthalin-1,5-diisocyanat (NDI), 3,3'-Dimethylbiphenyl-4,4'-diisocyanat (TODI) und das Isocyanurat des IPDI (IPDI-T).
Die erfindungsgemäß bevorzugten Isocyanate sind ausgewählt aus der Gruppe von 4,4'-Methylendi(phenylisocyanat) (MDI), TDI-Urethdion und TDI-Harnstoff.

Die erhaltenen desaktivierten Isocyanate werden dann mit einem geeigneten isocyanatreaktiven Polymer vereinigt, z. B. unter Rühren. Wenn das desaktivierte Isocyanat homogen und glatt eingearbeitet ist, sind die erfindungsgemäßen 1-Komponenten-Dispersionen einsatzbereit.

Die Menge an oberflächendesaktivierten oder verkapselten Isocyanaten in der erfindungsgemäßen Dispersionen beträgt im allgemeinen, berechnet als NCO-Gehalt, 0,1 bis 20 Gew.-%, insbesondere 0,1 bis 10 Gew.-%, vorzugsweise 0,1 bis 8 Gew. -%, ganz besonders bevorzugt 0,1 bis 5 Gew.-%.

Das mit Isocyanat reaktive Polymer besteht im allgemeinen aus Homopolymeren, Copolymeren oder deren Mischungen, die isocyanatreaktive funktionelle Gruppen tragen, wie z. B. Hydroxyl, Amino, Carboxyl, Carbonamid etc. Das isocyanatreaktive Polymer ist im allgemeinen wasserlöslich oder wasserdispergierbar. Beispielsweise kann es sich um ein wasserlösliches oder wasserdispergierbares Emulsions- oder Dispersionshomopolymer oder -copolymer handeln.
Das mit Isocyanat reaktive Polymer ist insbesondere ausgewählt ist aus der Gruppe von Polyurethanen, Polyvinylacetaten (PVAc), Ethylenvinylacetaten (EVA), Polyamiden und Polyacrylaten.
Gemäß einer besonderen Ausführungsform der vorliegenden Erfindung wird das mit Isocyanat reaktive Polymer in Form einer wäßrigen Dispersion eingesetzt, z. B. durch Zugabe der wäßrigen Polymerdispersion zu der Dispersion der Isocyanate oder umgekehrt. Die wäßrige Dispersion des isocyanatreaktiven Polymers kann gegebenenfalls ionisch stabilisiert sein. Beispiele für solche wäßrige Dispersionen isocyanatreaktive Polymere sind anionische oder kationische Dispersionen, die Polyurethan enthalten, welches gegebenenfalls Carboxylgruppen, Hydroxylgruppen, primäre Aminogruppen und/oder sekundäre Aminogruppen etc. tragen kann.
Gemäß einer weiteren Ausführungsform der vorliegenden Erfindung ist das mit Isocyanat reaktive Polymer ein geeigneter Dispersionsklebstoff, z. B. ein Dispersionsklebstoff auf Polyurethanbasis (wie Disperkoll® KA 8758, Bayer AG). Diese Ausführungsform ist besonders bevorzugt, wenn die erfindungsgemäße Dispersion als Klebstoff verwendet werden soll.
Der Gehalt an mit Isocyanat reaktivem Polymer ist abhängig von der Art des Polymers sowie von der jeweiligen Anwendung. Im allgemeinen beträgt er, bezogen auf das Gesamtgewicht der Dispersion, 1 bis 75 Gew.-%, insbesondere 5 bis 70 Gew.-%, vorzugsweise 5 bis 50 Gew. -%.

Weiter können die erfindungsgemäßen 1-Komponenten-Dispersionen Lösungsmittel und/oder zusätzliche Inhaltsstoffe, Zusatzstoffe oder Additive enthalten. Diese zusätzlichen Inhaltsstoffe, Zusatzstoffe oder Additive müssen gegenüber den anderen Dispersionsbestandteilen inert sein. Art und Menge solcher zusätzlichen Inhaltsstoffe, Zusatzstoffe oder Additive sind dem Fachmann geläufig. Beispiele für erfindungsgemäß geeignete Inhaltsstoffe, Zusatzstoffe oder Additive sind insbesondere Netzmittel (z. B. Ester wie Natriumsulfobernsteinsäureester, Polyoxyethylensorbitantrioleate etc.), Entschäumungsmittel oder Entschäumer, organische oder anorganische Verdicker oder Verdickungsmittel (Polymerverdicker wie beispielsweise Polyacrylsäure, Cellulose, mineralische Verdickungsmittel wie Schichtsilikate etc.), Weichmacher, Füllstoffe, Kunststoffpulver, Pigmente, Farbstoffe, Lichtstabilisatoren, Alterungsstabilisatoren, Korrosionsschutzmittel, Flammschutzmittel, Treibmittel, Harze, organofunktionelle Silane, Katalysatoren, kurzgeschnittene Fasern und gegebenenfalls geringe Mengen von inerten organischen Lösungsmitteln.

Der pH-Wert der erfindungsgemäßen Dispersionen liegt im allgemeinen im Bereich von 6 bis 9. Gegebenenfalls kann die Einstellung durch geeignete Basen oder Säuren erfolgen.

Die Viskosität der erfindungsgemäßen 1-Komponenten-Dispersionen bleibt bei Raumtemperatur über einen Lagerungszeitraum von mindestens 3 Monaten, vorzugsweise über einen Zeitraum von mindestens 6 Monaten, konstant. Dies zeigt, daß der Isocyanatgehalt in den erfindungsgemäßen Dispersionen in diesem Zeitraum konstant bleibt, d. h. mit anderen Worten die erfindungsgemäßen Dispersionen über diesen Zeitraum lagerstabil sind. Lagerstabil in diesem Zusammenhang bedeutet, daß die erfindungsgemäßen 1-Komponenten-Systeme aus oberflächendesaktivierten Isocyanaten und isocyanatreaktiven Polymeren im Zustand der Dispersion gelagert werden können, d. h. im Zustand der Dispersion die reaktiven Gruppen beider Komponenten im wesentlichen nicht miteinander reagieren und somit unverändert bleiben, so daß die Vernetzungsfähigkeit im Zustand der Dispersion beibehalten wird. Nach Auftrag zu Schichten beginnt jedoch während und/oder nach Entfernen des Wassers bei niedrigen Temperaturen die Vernetzungsreaktion.

Mit den erfindungsgemäßen Dispersionen lassen sich Schichten auftragen, die während und/oder nach Verdampfen des Wassers zu Filmen vernetzen.

Die ausgehend von den erfindungsgemäßen Dispersionen nach Entfernen des Wasser gebildeten Filme mit 1000 µm Schichtdicke weisen nach 4-, 7-, 14- und 28tägiger Lagerung bei Raumtemperatur Reißfestigkeiten von mindestens 10,5 N/mm² auf. Gegenstand der vorliegenden Erfindung sind somit auch vernetzte Filme und Schichten, die sich nach Entfernen des Wassers ausgehend von den erfindungsgemäßen Dispersionen erhalten lassen, sowie ihre Herstellung. Die Filme zeigen im allgemeinen eine hohe Wärmestandfestigkeit und eine erhöhte chemische Beständigkeit.

Die Mindestfilmbildungstemperatur (MFT) der erfindungsgemäßen Dispersionen liegt unterhalb der Vernetzungstemperatur, insbesondere unterhalb von 40 °C. Die Mindestfilmbildungstemperatur gibt die Temperatur an, oberhalb derer eine Dispersion einen geschlossenen Film bildet, und wird nach DIN 53787:1974-02 bestimmt.

Ohne sich auf eine bestimmte Theorie festlegen zu wollen, läßt sich das Einsetzen der Vernetzung während und/oder nach Entfernen des Wassers möglicherweise dadurch erklären, daß die bei der Filmbildung auftretenden Autohäsionskräfte die verkapselnden Polymerhüllen der Isocyanate mechanisch zerstören oder aufbrechen, wodurch es zu einer Vernetzungsreaktion kommt, die durch die Zunahme der Filmkohäsion bzw. Abnahme der Filmdehnung nachweisbar wird.

Gegenstand der vorliegenden Erfindung ist auch ein Verfahren zur Herstellung der erfindungsgemäßen Dispersionen. Dabei werden in der Regel die folgenden Verfahrensschritte durchlaufen:
- Herstellen einer Dispersion der zuvor beschriebenen Isocyanate mit Hilfe herkömmlicher Dispergiermethoden;
- Oberflächendesaktivierung der in Dispersion befindlichen Isocyanate nach den zuvor beschriebenen Methoden, wobei zur Oberflächendesaktivierung ein niedermolekulares, eine oder mehrere primäre und/oder sekundäre Aminogruppen enthaltendes Desaktivierungsmittel mit einem Molekulargewicht von 200 g/mol oder weniger eingesetzt wird und wobei der Desaktivierungsgrad (DG), berechnet als Äquivalentverhältnis von Aminogruppen zu Isocyanatgruppen, so eingestellt wird, daß gilt:
   0,009:1,0 < DG < 0,05:1,0 ; und
- Vereinigen der auf diese Weise hergestellten Dispersion des oberflächendesaktivierten Isocyanats mit einem wie zuvor definierten isocyanatreaktiven Polymer.

Die 1-Komponenten-Dispersionen nach der Erfindung können in vielfältiger Weise eingesetzt werden, z. B. als Lack, Beschichtung, Dichtstoff, Vergußmasse und/oder als Klebstoff. Gegenstand der vorliegenden Erfindung sind somit auch Lacke, Beschichtungen, Dichtstoffe, Vergußmassen und/oder Klebstoffe, welche die erfindungsgemäße 1-Komponenten-Dispersionen enthalten.
Wie zuvor erwähnt, kann bei der Verwendung der erfindungsgemäßen Dispersionen als Klebstoff den Dispersionen als isocyanatreaktives Polymer ein geeigneter Dispersionsklebstoff, insbesondere ein Dispersionsklebstoff auf Polyurethanbasis (z. B. Dispercoll® KA 8758), zugesetzt sein.

Die 1-Komponenten-Dispersionen nach der Erfindung weisen den Vorteil auf, daß sie bei relativ niedrigen Temperaturen, insbesondere bei Raumtemperatur, vernetzen, wodurch sich die Nachteile des Standes der Technik vermeiden lassen.
Wie zuvor beschrieben, lassen sich durch die richtige Einstellung und Abstimmung der Dispersionsparameter, insbesondere durch die Wahl eines geeigneten festen Isocyanats, durch die Wahl eines geeigneten Desaktivierungsmittels, durch die Einstellung des Desaktivierungsgrades (Äquivalentverhältnis N_{NH₂}/N_{NCO}) und durch die Wahl des geeigneten isocyanatreaktiven Polymers, die gewünschten Eigenschaften der erfindungsgemäßen Dispersionen erhalten.

Gegenüber den bekannten 2-Komponenten-Systemen bieten die erfindungsgemäßen 1-Komponenten-Dispersionen den Vorteil, daß dem Anwender verfahrensbedingte Fehler, z. B. Dosierungs- oder Mischfehler, nicht mehr unterlaufen können.

Wie zuvor beschrieben, können die erfindungsgemäßen Dispersionen beispielsweise als Klebstoffe bzw. Bestandteil von Klebstoffen Verwendung finden. Gegenstand der vorliegenden Erfindung ist auch eine Klebeverfahren, insbesondere Preßklebeverfahren, unter Verwendung der erfindungsgemäßen Dispersionen. Hierbei werden im allgemeinen die folgenden Verfahrensschritte durchlaufen:
- Auftrag einer homogenen Schicht der erfindungsgemäßen Dispersionen mit gewünschter Schichtdicke auf einem Träger, wobei der Auftrag mit üblichen Methoden erfolgen kann (z. B. durch Aufstreichen, Rakeln, Aufsprühen, Eintauchen etc.);
- Entfernen des Wassers bzw. Trocknen der aufgetragenen Schicht, gegebenenfalls unter kurzzeitigem Erwärmen, wobei jedoch die reaktiven Gruppen beim Trocknungsvorgang im wesentlichen unreagiert bleiben, so daß die Vernetzbarkeit der aufgetragenen Schicht erhalten bleibt;
- Zusammenfügen des auf diese Weise behandelten Trägers mit einem zu verklebenden, insbesondere thermoplastischen Substrat zu einem Verbund;
- kurzzeitiges Erwärmen des auf diese Weise erhaltenen Verbunds unter Druck, vorzugsweise Verpressen, so daß die ausgehend von der Dispersion aufgetragene und getrocknete Schicht klebrig gemacht wird, wobei im allgemeinen Temperaturen oberhalb der Erweichungstemperatur des zu verklebenden, insbesondere thermoplastischen Substrats und/oder oberhalb der Erweichungstemperatur des isocyanatreaktiven Polymers angewandt werden; und
- Abkühlen des Verbunds auf Umgebungstemperatur.
Nach dem Abkühlen des Verbunds auf Umgebungstemperatur tritt bei der anschließenden Lagerung aufgrund der Vernetzbarkeit der erfindungsgemäßen Dispersionen bei niedrigen Temperaturen eine im wesentlichen vollständige Vernetzung des Klebstoffilms ein.
Ein solches Verfahren eignet sich beispielsweise für das Verkleben temperaturempfindlicher und/oder thermoplastischer Substrate, wie z. B. PVC. Als geeignete Trägermaterialien können beispielsweise Holz, Metall oder Kunststoff verwendet werden.

Die 1-Komponenten-Dispersionen nach der Erfindung können beispielsweise in vorteilhafter Weise bei der Verklebung von dreidimensional geformten Möbelfronten eingesetzt werden. Derartige Möbelfronten werden heute so hergestellt, daß ein konturierter MDF-Träger (MDF = mitteldichte Faserplatte) mit einer Kunststoffolie unter Druck und Temperatur so verpreßt wird, daß die Folie sich an die durch den Träger vorgegebenen Konturen der MDF-Oberfläche anpaßt.
Die kraftschlüssige Verbindung zwischen den beiden Substraten erfordert einen Klebstoff, der zuvor auf dem Träger aufgebracht wurde.
Aus dem Stand der Technik ist es bekannt, daß zur Erzielung hochwertiger Klebungen mit guter Wärmestandfestigkeit 2-Komponenten-Polyurethandispersionssysteme eingesetzt werden, wobei die wäßrige Dispersion unmittelbar vor Gebrauch mit dem in Wasser emulgierbaren flüssigen Polyisocyanat intensiv gemischt wird. Durch Dosierungsfehler oder durch unzureichende Vermischung der Komponenten können jedoch die optimalen Wärmestandfestigkeiten nicht erzielt werden. Ferner ist der Verarbeitungszeitraum dieser 2-Komponenten-Systeme durch die Topfzeit auf nur wenige Stunden begrenzt.
Diese zuvor geschilderten Nachteile lassen sich aber in vorteilhafter Weise durch den erfindungsgemäßen 1-Komponenten-Dispersionsklebstoff vermeiden.

Weitere Ausführungsformen, Ausgestaltungen und Variationen der vorliegenden Erfindung sind dem Fachmann ohne weiteres geläufig, ohne daß er hierbei den Rahmen der vorliegenden Erfindung verläßt.

Die vorliegende Erfindung wird durch die folgenden Ausführungsbeispiele veranschaulicht, die jedoch keinesfalls beschränkend sind.

### Beispiel 1: Herstellung der desaktivierten Isocyanate

### Beispiel 1.1: Oberflächendesaktivierung von TDI-Urethdion in organischer Phase

In einem Becherglas werden 100 ml Cyclohexan vorgelegt, und unter kräftigem Rühren werden 20 g eines TDI-Urethdions (Desmodur TT® , Bayer AG) suspendiert. Anschließend erfolgt die Zugabe einer Lösung von 0,26 g Methylpentamethylendiamin (Dytek A® , DuPont) in 50 ml Cyclohexan. Die Lösung wird nach einer Rührzeit von zwei Stunden vom Lösungsmittel befreit, so daß ein feinteiliges, weißes Pulver erzielt wird.
Man erhält oberflächendesaktiviertes TDI-Urethdion mit einem Desaktivierungsgrad, berechnet als Äquivalentverhältnis von Aminogruppen zu Isocyanatgruppen (N_{NH₂}/N_{NCO}), von etwa 0,04:1, d. h. von etwa 4 %.

### Beispiel 1.2: Oberflächendesaktivierung von TDI-Harnstoff in organischer Phase

Das Verfahren zur Herstellung entspricht dem nach Beispiel 1.1, wobei anstelle des TDI-Urethdions ein TDI-Harnstoff (Desmodur LS 2116® , Bayer AG) eingesetzt wird.

### Beispiel 1.3: Oberflächendesaktivierung von TDI-Urethdion in wäßriger Phase

Zu 58 1 Wasser gibt man 0,56 kg Methylpentamethylendiamin, und gegebenenfalls nach Zugabe üblicher Dispergierhilfsmittel fügt man unter Rühren 41,2 kg TDI-Urethdion hinzu, bis eine homogene wäßrige Paste eines desaktivierten TDI-Urethdions entstanden ist.
Man erhält oberflächendesaktiviertes TDI-Urethdion mit einem Desaktivierungsgrad, berechnet als Äquivalentverhältnis von Aminogruppen zu Isocyanatgruppen (N_{NH₂}/N_{NCO}), von etwa 0,04:1, d. h. von etwa 4 %.

### Beispiel 2: Herstellung und Vernetzung von 1-Komponenten-Dispersionsklebstoffen

Zu einer ionisch stabilisierten 40%igen Polyurethandispersion (Dispercoll® KA 8758) werden die desaktivierten Isocyanate aus Beispiel 1.1, Beispiel 1.2 und Beispiel 1.3 unter Rühren zugegeben. Es wird solange gemischt, bis die Isocyanate homogen und glatt eingearbeitet sind. Es resultieren erfindungsgemäße lagerstabile 1-Komponenten-Dispersionsklebstoffe, die desaktiviertes TDI-Urethdion bzw. desaktivierten TDI-Harnstoff und als isocyanatreaktives Polymer Polyurethan enthalten.
Die Vernetzung der lagerstabilen 1-Komponenten-Dispersionsklebstoffe wurde bei Raumtemperatur an folgenden Beispielen verdeutlicht:

### Vergleichsbeispiel:

Thermoplastische 1-Komponenten-Dispersion (Polyurethandispersion) ohne Zusatz desaktivierter (verkapselter) Isocyanate:
100 g Dispercoll® KA 8758, Bayer AG (40%ige, ionisch stabilisierte Polyurethandispersion).

### Beispiel 2.1:

Vernetzbare erfindungsgemäße 1-Komponenten-Dispersion aus Polyurethan (Dispercoll® KA 8758) und desaktivierten Isocyanaten:
100 g Dispercoll® KA 8758 und 4 g desaktiviertes Isocyanat gemäß Herstellungsbeispiel 1.1 werden innig miteinander vermischt. Man erhält eine erfindungsgemäße Dispersion.

### Beispiel 2.2:

Vernetzbare erfindungsgemäße 1-Komponenten-Dispersion aus Polyurethan (Dispercoll® KA 8758) und desaktivierten Isocyanaten:
100 g Dispercoll® KA 8758 und 4 g desaktiviertes Isocyanat gemäß Herstellungsbeispiel 1.2 werden innig miteinander vermischt. Man erhält eine erfindungsgemäße Dispersion.

### Beispiel 2.3:

Vernetzbare erfindungsgemäße 1-Komponenten-Dispersion aus Polyurethan (Dispercoll® KA 8758) und desaktivierten Isocyanaten:
100 g Dispercoll® KA 8758 und 4 g desaktiviertes Isocyanat gemäß Herstellungsbeispiel 1.3 werden innig miteinander vermischt. Man erhält eine erfindungsgemäße Dispersion.

### Bestimmung der Reißfestigkeit:

Ausgehend von den Dispersionen des Vergleichsbeispiels und der Beispiele 2.1, 2.2 und 2.3 wurden jeweils 1000 µm starke Filme mit einem Kastenrakel gezogen, getrocknet (20 °C / 65 % relative Feuchtigkeit) und unter diesen Bedingungen gelagert und vernetzt. Die Reißfestigkeit der auf diese Weise vernetzten Filme wurde mit einer Zugprüfmaschine nach unterschiedlichen Lagerdauern (4, 7, 14 und 28 Tage) bestimmt.
Die Reißfestigkeiten der ausgehend von der Dispersion des Vergleichsbeispiels hergestellten Filme liegen nach 4-, 7-, 14- bzw. 28tägiger Lagerung bei Raumtemperatur zwischen 6,5 und 7,3 N/mm².
Dagegen liegen die Reißfestigkeiten der ausgehend von den erfindungsgemäßen Dispersionen der Beispiele 2.1, 2.2 und 2.3 hergestellten Filme jeweils oberhalb von 10,5 N/mm² und damit signifikant über den Reißfestigkeiten der Filme nach dem Vergleichsbeispiel.
Die Viskosität der hergestellten 1-Komponenten-Dispersionsklebstoffe nach Beispiel 2.1, Beispiel 2.2 und Beispiel 2.3 blieb über einen Lagerungszeitraum von 3 Monaten bei Raumtemperatur konstant.

### Bestimmung des Speichermoduls G':

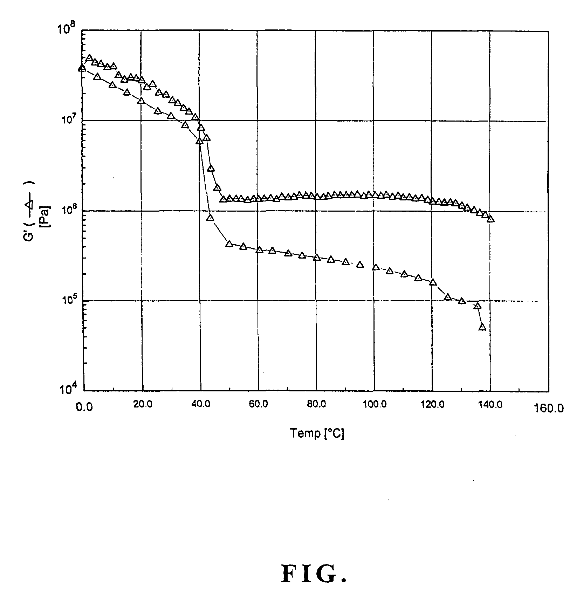

Die einzige Figur zeigt die DMA-Kurve von zwei verschiedenen Polyurethandispersionen. Aufgetragen ist der Speichermodul G' als Funktion der Temperatur. Die obere Kurve zeigt den temperaturabhängigen Verlauf des Speichermoduls G' für eine erfindungsgemäße Dispersion aus desaktiviertem Polyisocyanat und Polyurethan. Die untere Kurve dagegen zeigt den Verlauf des Speichermoduls G' für das Vergleichssystem, eine reine Polyurethandispersion (obiges Vergleichsbeispiel). Die beiden Proben sind als Filme bei Raumtemperatur jeweils 2 Wochen gelagert worden. Die Figur zeigt deutlich, daß das erfindungsgemäße System nach Vernetzung bei Raumtemperatur über den gesamten Temperaturverlauf einen höheren Speichermodul G', d. h. eine höhere Kohäsion, besitzt.

### Beispiel 3: Herstellung eines erfindungsgemäßen 1-Komponenten-Dispersionsklebstoffs

Zu 77 kg einer Polyurethandispersion (Dispercoll® U 53, Bayer AG, 40%ige Dispersion) mischt man gegebenenfalls nach Zugabe bekannter oberflächenaktiver Substanzen 8,8 kg des in Beispiel 1.3 hergestellten oberflächendesaktivierten TDI-Urethdions zu und stellt durch Zugabe von üblichen Verdickungsmitteln die Viskosität der Anwendung entsprechend ein.
Man erhält eine erfindungsgemäße Dispersion, die desaktiviertes TDI-Urethdion und als iscocyanatreaktives Polymer ein Polyurethan enthält und als Dispersionsklebstoff verwendet werden kann.
Die Viskosität der erfindungsgemäßen Dispersion bleibt über 3 Monate konstant, was zeigt, daß der Isocyanatgehalt der Dispersion 3 Monate lang unverändert bleibt, d. h. die Dispersion über 3 Monate lagerstabil ist.

### Beispiel 4: Herstellung eines erfindungsgemäßen 1-Komponenten-Dispersionsklebstoffs

Man verfährt wie unter Beispiel 3, jedoch mit der Abweichung, daß man anstelle des in Beispiel 1.3 hergestellten TDI-Urethdions das in Beispiel 1.1. hergestellte TDI-Urethdions verwendet.
Man erhält eine erfindungsgemäße Dispersion, die desaktiviertes TDI-Urethdion und als iscocyanatreaktives Polymer ein Polyurethan enthält und als Dispersionsklebstoff verwendet werden kann.
Die Viskosität der erfindungsgemäßen Dispersion bleibt über 3 Monate konstant, was zeigt, daß der Isocyanatgehalt der Dispersion 3 Monate lang unverändert bleibt, d. h. die Dispersion über 3 Monate lagerstabil ist.

## Patentansprüche

1. Bei Raumtemperatur lagerstabile, im wesentlichen wäßrige 1-Komponenten-Dispersion, enthaltend
(a) mindestens ein oberflächendesaktiviertes oder verkapseltes festes Isocyanat, das mit einem niedermolekularen Desaktivierungsmittel mit einem Molekulargewicht von weniger oder gleich 200 g/mol desaktiviert worden ist,
wobei das Desaktivierungsmittel eine oder mehrere primäre und/oder sekundäre Aminogruppen enthält und wobei der als Äquivalentverhältnis von Aminogruppen zu Isocyanatgruppen berechnete Desaktivierungsgrad zwischen 0,009:1,0 und 0,05:1,0 liegt;
(b) mindestens ein mit Isocyanat reaktives Polymer,
so daß die ausgehend von dieser Dispersion gebildeten Filme oder Schichten während und/oder nach Entfernen des Wassers bei Temperaturen zwischen 5 °C und 40 °C, insbesondere bereits bei Raumtemperatur (20 °C, 65 % relative Feuchtigkeit), vernetzbar sind.

2. 1-Komponenten-Dispersion nach Anspruch 1, wobei das Isocyanat ausgewählt sein kann aus der Gruppe von Toluylendiisocyanat-Urethdion (TDI-Urethdion), Toluylendiisocyanat-Harnstoff (TDI-Harnstoff) und 4,4'-Methylendi(phenylisocyanat) (MDI) und/oder wobei die Menge an oberflächendesaktiviertem oder verkapseltem Isocyanat in der Dispersion, berechnet als NCO-Gehalt, 0,1 bis 20 Gew.-%, insbesondere 0,1 bis 10 Gew.-%, vorzugsweise 0,1 bis 8 Gew. -%, ganz besonders bevorzugt 0,1 bis 5 Gew.-%, betragen kann.

3. 1-Komponenten-Dispersion nach Anspruch 1 oder 2, wobei das Desaktivierungsmittel ein Molekulargewicht von weniger oder gleich 180 g/mol, insbesondere von weniger oder gleich 160 g/mol, vorzugsweise von weniger oder gleich 140 g/mol, ganz besonders bevorzugt von weniger oder gleich 120 g/mol, aufweist, insbesondere wobei das Desaktivierungsmittel ausgewählt sein kann aus der Gruppe von cyclischen oder aliphatischen, geradkettigen oder verzweigten (C₂-C₁₄)-Alkylaminen, -diaminen und -polyaminen, insbesondere (C₂-C₁₀)-Alkylaminen, -diaminen und -polyaminen, vorzugsweise (C₂-C₆)-Alkylaminen, - diaminen und -polyaminen, wobei die Alkylkette zumindest teilweise oder aber vollständig durch Heteroatome, insbesondere Sauerstoff oder Schwefel, unterbrochen sein kann und/oder wobei die Alkylkette weitere Substituenten wie Hydroxylgruppen, Carboxylgruppen oder Halogen enthalten kann.

4. 1-Komponenten-Dispersion nach einem der Ansprüche 1 bis 3, wobei das mit Isocyanat reaktive Polymer Homopolymere, Copolymere oder deren Mischungen umfaßt, die isocyanatreaktive funktionelle Gruppen tragen, insbesondere wobei das mit Isocyanat reaktive Polymer ausgewählt sein kann aus der Gruppe von Polyurethanen, Polyvinylacetaten (PVAc), Ethylenvinylacetaten (EVA), Polyamiden und Polyacrylaten.

5. 1-Komponenten-Dispersion nach einem der Ansprüche 1 bis 4, wobei das mit Isocyanat reaktive Polymer in Form einer wäßrigen Dispersion eingesetzt wird, die gegebenenfalls ionisch stabilisiert sein kann, insbesondere wobei das mit Isocyanat reaktive Polymere eine anionische oder kationische Dispersion sein kann, die Polyurethan enthält, welches gegebenenfalls Carboxylgruppen, Hydroxylgruppen, primäre Aminogruppen und/oder sekundäre Aminogruppen trägt.

6. 1-Komponenten-Dispersion nach einem der Ansprüche 1 bis 5, wobei das mit Isocyanat reaktive Polymer ein geeigneter Dispersionsklebstoff ist, insbesondere wobei der Dispersionsklebstoff ein Dispersionsklebstoff auf Polyurethanbasis sein kann.

7. 1-Komponenten-Dispersion nach einem der Ansprüche 1 bis 6, wobei die Menge an mit Isocyanat reaktivem Polymer in der Dispersion, bezogen auf das Gesamtgewicht der Dispersion, 5 bis 75 Gew.-%, insbesondere 5 bis 70 Gew.-%, vorzugsweise 5 bis 50 Gew. -%, beträgt.

8. 1-Komponenten-Dispersion nach einem der Ansprüche 1 bis 7, wobei die Viskosität der 1-Komponenten-Dispersion bei Raumtemperatur über einen Lagerungszeitraum von mindestens 3 Monaten, insbesondere mindestens 6 Monaten, konstant bleibt.

9. 1-Komponenten-Dispersion nach einem der Ansprüche 1 bis 8, weiter enthaltend zusätzliche Inhaltsstoffe, Zusatzstoffe oder Additive und/oder Lösungsmittel.

10. 1-Komponenten-Dispersion nach einem der Ansprüche 1 bis 9, wobei die ausgehend von der Dispersion gebildeten Filme oder Schichten mit 1000 µm Schichtdicke nach 4-, 7-, 14- und 28tägiger Lagerung bei Raumtemperatur Reißfestigkeiten von mindestens 10,5 N/mm² aufweisen.

11. 1-Komponenten-Dispersion nach einem der Ansprüche 1 bis 10 zur Verwendung als Klebstoff, Beschichtung, Dichtstoff, Vergußmasse oder Lack.

12. Klebstoff, Beschichtung, Dichtstoff, Vergußmasse oder Lack, enthaltend eine 1-Komponenten-Dispersion nach einem der Ansprüche 1 bis 11.

13. Filme oder Schichten, erhältlich unter Verwendung der 1-Komponenten-Dispersion nach einem der Ansprüche 1 bis 11, insbesondere wobei die Filme bei einer Schichtdicke von 1000 µm nach 4-, 7-, 14- und 28tägiger Lagerung bei Raumtemperatur Reißfestigkeiten von mindestens 10,5 N/mm² aufweisen können.

14. Verfahren zur Herstellung der Dispersion nach einem der Ansprüche 1 bis 11, **gekennzeichnet durch** die folgenden Verfahrensschritte:
- Herstellen einer Dispersion der wie zuvor definierten Isocyanate mit Hilfe herkömmlicher Dispergiermethoden;
- Oberflächendesaktivierung der in Dispersion befindlichen Isocyanate, wobei zur Oberflächendesaktivierung ein niedermolekulares, eine oder mehrere primäre und/oder sekundäre Aminogruppen enthaltendes Desaktivierungsmittel mit einem Molekulargewicht von 200 g/mol oder weniger eingesetzt wird und wobei der Desaktivierungsgrad (DG), berechnet als Äquivalentverhältnis von Aminogruppen zu Isocyanatgruppen, so eingestellt wird, daß 0,009:1,0 < DG < 0,05:1,0; und
- Vereinigen der auf diese Weise hergestellten Dispersion des oberflächendesaktivierten Isocyanats mit einem wie zuvor definierten isocyanatreaktiven Polymer.

15. Klebeverfahren, insbesondere Preßklebeverfahren, unter Verwendung der Dispersion nach einem der Ansprüche 1 bis 11, **gekennzeichnet durch** die folgenden Verfahrensschritte:
- Auftrag einer homogenen Schicht der Dispersion nach einem der Ansprüche 1 bis 11 mit gewünschter Schichtdicke auf einem Träger;
- Trocknen der aufgetragenen Schicht, gegebenenfalls unter kurzzeitigem Erwärmen, wobei jedoch die reaktiven Gruppen beim Trocknungsvorgang im wesentlichen unreagiert bleiben, so daß die Vernetzbarkeit der aufgetragenen Schicht erhalten bleibt;
- Zusammenfügen des auf diese Weise behandelten Trägers mit einem zu verklebenden, insbesondere thermoplastischen Substrat zu einem Verbund;
- kurzzeitiges Erwärmen des auf diese Weise erhaltenen Verbunds unter Druck, vorzugsweise Verpressen, so daß die aufgetragene und getrocknete Schicht der Dispersion klebrig gemacht wird, wobei im allgemeinen Temperaturen oberhalb der Erweichungstemperatur des zu verklebenden, insbesondere thermoplastischen Substrats und/oder oberhalb der Erweichungstemperatur des isocyanatreaktiven Polymers angewandt werden; und
- Abkühlen des auf diese Weise behandelten Verbunds auf Umgebungstemperatur.
